(19)

Europäisches
Patentamt
European
Patent Office
Office européen
des brevets

(11) **EP 3 508 330 A1**

(12) **EUROPEAN PATENT APPLICATION**
published in accordance with Art. 153(4) EPC

(43) Date of publication:
**10.07.2019 Bulletin 2019/28**

(21) Application number: **16915343.4**

(22) Date of filing: **01.09.2016**

(51) Int Cl.:
***B29C 64/135*** (2017.01)

(86) International application number:
**PCT/UA2016/000104**

(87) International publication number:
**WO 2018/044249 (08.03.2018 Gazette 2018/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Khalip, Oleg Yurevich
Zaporozhe 69032 (UA)**

(72) Inventor: **Khalip, Oleg Yurevich
Zaporozhe 69032 (UA)**

(74) Representative: **Glawe, Delfs, Moll
Partnerschaft mbB von
Patent- und Rechtsanwälten
Postfach 13 03 91
20103 Hamburg (DE)**

(54) **DEVICE AND METHOD FOR FORMING A THREE-DIMENSIONAL OBJECT FROM A LIQUID POLYMER**

(57)     A method of forming a three-dimensional object, is carried out by (a) providing a carrier and a build plate, the build plate comprising a semipermeable member, the semipermeable member comprising a build surface with the build surface and the carrier defining a build region therebetween, and with the build surface in fluid communication by way of the semipermeable member with a source of polymerization inhibitor; (b) filling the build region with a polymerizable liquid, the polymerizable liquid contacting the build surface; (c) irradiating the build region through the build plate to produce a solid polymerized region in the build region, while forming or maintaining a liquid film release layer comprised of the polymerizable liquid formed between the solid polymerized region and the build surface, the polymerization of which liquid film is inhibited by the polymerization inhibitor; and (d) advancing the carrier with the polymerized region adhered thereto away from the build surface on the build plate to create a subsequent build region between the polymerized region and the build surface; (e) wherein the carrier has at least one channel formed therein, and the filling step is carried out by passing or forcing the polymerizable liquid into the build region through the at least one channel. Apparatus for carrying out the method is also described.

FIG. 1

**Description**

The invention relates to the construction of three-dimensional objects/objects by curing the liquid photopolymer using actinic radiation.

BACKGROUND OF THE INVENTION

A method for forming a three-dimensional object from a liquid photopolymer by curing with actinic radiation is well known, see, for example, US patent 7438846, application number US 20070063389 filed March 22, 2007, published October 21, 2008, MP B28B 7/36, B29C 33/68, B29C 35/04; it includes the object illumination by actinic radiation using a projection system, the exposure of the photopolymer with a set of projected cross-sections of the object, the movement of the object along the axis of construction and building up three-dimensional objects in layers from "light-hardening" photopolymers. In this case, the building zone is limited by the projector window - the optical interface, and the elastic film is used as the material bordering the photopolymer.

During exposure to actinic radiation, the curable photopolymer can be adhered to the optical interface material due to the formation of chemical bonds and/or adhere to the surface of the optical interface in the sucker type, since the built/formed surface is pressed against the plane of the optical interface by atmospheric pressure. These two effects prevent the liquid photopolymer from flowing smoothly into the exposure zone of the cross-section of the forming object and do not allow the object forming process to be continuously carried out, therefore, one section layer is exposed during the manufacturing process, then the exposure is interrupted, the object is moved along the vertical axis by the layer thickness. During this vertical movement, the elastic film is peeled off from the surface of the cured object due to the elastic properties of the film or by means of a tensioning mechanism, during the process of the movement of the formed object, the liquid photopolymer enters the space between the object and the surface of the optical interface, and then the cross-section exposure is re-enabled. The described cycle is repeated after each cross-sectional layer is formed.

Disadvantages of this known method is that the object building is rather slow and, moreover, it does not provide a sufficiently high quality of the built objects. This known method does not allow for the exposure and movement of the formed object to be performed continuously, the object is formed layer by layer with pauses between the radiation exposures.

There is a known method for forming a three-dimensional object from a liquid photopolymer (see US Publication 20130292862 dated 1/07/2013 for the application US 201213600729 dated August 31, 2012, B29C 67/00), including the exposure of a section, the movement of the formed object on a vertical axis, the formation of an object from a liquid photopolymer. In this known method, a container with a photopolymer has a window for exposure, aka the optical interface, performs lateral (sliding) motion; then in the shifted position, when the photopolymer is not present above the optical interface, the optical interface material is saturated with a polymerization inhibitor (oxygen) supplied through an external pipeline. Due to this, the boundary layer of the photopolymer, which is in contact with the surface of the optical interface, is subsequently preserved in the non-cured (liquid) state.

The known method prevents gluing and adherence of the formed object to the surface of the optical interface; however, the process is associated with regular side movements of the photopolymer container and mechanical cleaning of the surface of the optical interface, therefore, the exposure is carried out intermittently to perform these operations.

Disadvantages of the known method is that it does not provide a sufficiently high rate of object formation and does not provide a sufficiently high quality of the objects to be formed. This known method does not allow for the exposure and movement of the formed object continuously, the object is formed layer by layer with pauses in the exposure.

The closest in technical essence and successful technical result to the claimed technical solution is the method for forming a three-dimensional object from a liquid photopolymer (see Canadian patent No. 2898106 (A1) dated August 21, 2014, publication WO2014126834 (A3), published on November 13,.2014, GKF G03F 7/00), by actinic radiation, including the projection of the elementary section of the actinic radiation, continuous exposure of the sequence of the elementary sections, the movement of the formed object along the axis of the formation axis of the object from the mobile boundary zone of the photopolymer.

In this known method, the mobility of the photopolymer boundary zone is provided by inhibiting the boundary zone. In this case, an inhibitor in the form of a solution or gas, for example, oxygen, is supplied from an external source or from a reservoir structurally connected to an optical interface unit. The presence of an inhibitor in the boundary layer leads to the effect of polymerization inhibition. At the same time, a certain layer of the photopolymer near the surface of the optical interface remains uncured and mobile, which makes it possible to avoid both adherence to the formation of chemical bonds and adherence of the formed object of the sucker type and provides an influx of fresh portions of the photopolymer into the exposure zone when the object is moved. Continuous movement of the object along the construction axis allows an acquiring of a higher resolution along the construction axis, as well as an in increase in the speed of object formation and, as a result, higher equipment efficiency.

Disadvantages of this known method is that it does not provide a sufficiently high rate of object formation and, moreover, does not provide a sufficiently high quality of the formed objects. This is explained by the fact that in the known method of forming objects to prevent the gluing / sticking of the object and for accelerating the construction of the object, the preliminary saturation of the boundary layer of the optical interface with a polymerization inhibitor is applied.

The inhibitor itself is already contained in the material of the optical interface or is delivered through its surface to the photopolymer as a gas or a solution, and it changes the characteristics of the photopolymer over the entire contact area of the photopolymer with the optical interface. This negatively affects the quality of manufactured objects, because the inhibitor accumulates and degrades the characteristics of the photopolymer, which remains in the container after the manufacturing of one or more objects. This is explained by the fact that the gradual diffusion of the inhibitor into the volume of the photopolymer occurs during the realization of the method.

In addition, the quality of the formed object is affected by the fact that the properties of the photopolymer immediately in the formation zone, i.e., in the mobile, partially inhibited zone, are changed under the action of the polymerization inhibitor, and two opposite processes are simultaneously occurred during the formation of the object: inhibition and polymerization, therefore the polymerization rate potential cannot be fully realized.

The known method does not allow using photopolymers with different types of polymerization without additional techniques. It is necessary to carry out an individual development or selection of a photopolymerizable material taking into account the possible method of its inhibition and the use of appropriate reagents.

The closest in technical essence and achieved technical result to the claimed technical solution is the device for forming a three-dimensional object from a liquid photopolymer (see Canadian patent No. 2898106A1, publication WO2014126834 (A3), published on November 13, 2013) containing at least one source of actinic radiation, a container for placing the photopolymer with a window (optical interface), and a mechanism for moving the object along the construction axis.

In this known device, the optical interface element, having contact with the photopolymer, is made in the form of a semipermeable membrane. The device comprises an external source or reservoir structurally associated with an optical interface and intended to supply an inhibitor.

In this known device, the mobility of the photopolymer boundary zone is provided by inhibiting the photopolymer present in this zone. At the same time, some of the photopolymer layer remains uncured and mobile, which allows avoiding both bonding with the formation of chemical bonds and adherence of the formed object like the sucker, and ensures the inflow of fresh portions of the photopolymer into the exposure zone of the cross section when the object is moved.

The disadvantages of this known device is that it does not provide a sufficiently high rate of object formation and, moreover, does not provide a sufficiently high quality of the object to be formed. In this known object-forming device, the inhibitor is already contained in the material of the optical interface or the device comprises a unit for feeding the inhibitor through its surface to the photopolymer in the form of a gas or solution. The effect of the inhibitor changes the characteristics of the photopolymer throughout the entire contact area of the photopolymer with the optical interface. This negatively affects the quality of the manufactured object, as the inhibitor accumulates and degrades the characteristics of the photopolymer, which remains in the container after the manufacture of one or more objects. This is due to the gradual diffusion of the inhibitor into the volume of the photopolymer.

In addition, the quality of the formed object is affected by the fact that the properties of the photopolymer immediately in the formation zone, i.e., in the mobile, partially inhibited zone, are changed under the action of the polymerization inhibitor, and two opposite processes are simultaneously realized during the formation of the object: inhibition and polymerization, i.e., the polymerization rate potential cannot be fully realized.

SUMMARY

The invention is based on the task of improving the method for forming a three-dimensional object from a liquid photopolymer, in which, by carrying out new operations, new conditions for their implementation, the actinic radiation energy is redistributed in the boundary zone of object formation.

This leads to an increase in the speed of the object formation and the functional possibilities of the method, as it is possible to speed continuous formation of objects using any photopolymer systems, regardless of the type of polymerization.

It is also the goal of the invention to improve the device for forming a three-dimensional object from a liquid photopolymer in which by introducing new elements, new execution of elements and the use of new materials for performing the elements, the energy of actinic radiation is redistributed in the boundary zone of object formation, improving the quality of the objects and expanding the functionality of the device, since provided the possibility of continuously forming objects using any photopolymer systems, regardless of polymerization type.

This goal is reached by the fact that in the method for forming a three-dimensional object from a liquid photopolymer cured by actinic radiation, including the projection of an elementary section with actinic radiation, continuous exposure of a sequence of elementary sections, continuous unidirectional movement of the formed object along the axis of construction, and forming an object from the mobile boundary zone of the photopolymer, the novelty is in the fact that the mobility of the boundary zone of the photopolymer is ensured by the fact that a transformation of the wave front of actinic radiation in such a way that the specific radiative intensity in the exposed areas has a gradient along the axis of construction, and the photopolymer is partially exposed in the mobile boundary zone.

The novelty is also in the fact that when performing the projection of the elementary cross-section by actinic radiation, the elementary section is divided into fragments, each of which is controlled separately, for example, exposure of the fragments is carried out alternately and/or at different levels of specific radiative intensity.

The goal is reached by the fact that in a device for forming a three-dimensional object from a liquid photopolymer containing at least one source of actinic radiation, a container for placing a photopolymer equipped with an optical interface window and a mechanism for moving the object along the construction axis, that the optical interface is made in the form of at least one wave actor of the actinic radiation, in the region of the focus plane of which an optically transparent element is arranged, is intended for contact with a photopolymer.

The novelty is also in the fact that the converter of the wavefront of actinic radiation is made in the form of a matrix of microlenses adjacent to each other and placed in a single layer on a common base of an optically transparent material.

The novelty is also in the fact that the wavefront transformer of actinic radiation is made in the form of a holographic optical element, for example, in the form of a Fresnel zone plate matrix, a flat phase or amplitude hologram, a bulk phase transmissive hologram, a matrix of holographic lenses, a phase synthesized hologram or a Fresnel microlens matrix.

The novelty is also in the fact that the optically transparent element intended for contact with the photopolymer is made in the form of a membrane of a thin film or in the form of a plate.

The novelty is also in the fact that the optically transparent element intended for contact with the photopolymer is made in the form of a membrane of a thin film or plate that is a wavefront converter.

The novelty is also in the fact that the device further comprises a temperature maintenance unit for an optically transparent element intended to contact the photopolymer.

The novelty is also in the fact that an optically transparent element intended for contact with the photopolymer is designed to perform oscillatory movements.

The novelty is also in the fact that the device contains at least two wavefront converters of actinic radiation, which form an optical interface.

The novelty is also in the fact that the device comprises at least two wavefront converters of actinic radiation, which form an optical interface, wherein at least one wavefront converter of actinic radiation is made in the form of a holographic optical element, for example, in the form of a transmission or reflective hologram.

The novelty is also in the fact that the device contains at least two sources of actinic radiation whose projection axes form the same or different angles with the plane of the optical interface.

The causal relationship between the set of essential features of the method and the technical result achieved is as follows.

The fact that in the method for forming a three-dimensional object from a liquid photopolymer, the wavefront of actinic radiation is transformed in such a way that the specific radiative intensity in the exposed areas has a gradient along the construction axis, where in the mobile boundary zone the photopolymer is partially exposed, in combination with known features of the method, provides improvement in the speed of the object formation, improved quality of the objects to be produced and expanded functionality of the method, as it provides the possibility of continuously forming objects using any photopolymer systems, regardless of polymerization type.

It is explained by the following. In the implementation of the claimed method, the object is continuously moved along the construction axis, which allows obtaining the highest print resolution and maximum object formation speed. As a result, resolutions of about 0.1 micron and a speed of 100 $\mu$m / s to 10,000 $\mu$m / sec and more are achievable along the construction axis. At the same time, the force necessary to move the formed object is stabilized, which allows for movement, avoiding jerks, as is the case with clock or reciprocating motion, which in turn in many cases makes it possible to reduce the number of support elements formed simultaneously with the object, and, accordingly, save consumables.

The fact that in the claimed method the prevention of sticking/adhesion of the formed object is ensured by the distribution of the energy of actinic radiation in the volume of the boundary layer of the object forming region in such a way that it provides partial mobility of the boundary zone, excluding the need for chemical action on the photopolymer, due to which the properties of the photopolymer remain unchanged.

Since no chemical modification of the photopolymer is carried out, photopolymer systems with any type of polymerization having a suitable photoactivity can be used in the process.

Because the specific radiative intensity in the exposed areas has a gradient along the construction axis, and in the moving boundary zone the photopolymer is partially exposed, a significant part of the photopolymer in the boundary region remains uncured. The presence of a mobile photopolymer in the boundary region ensures its rapid continuous inflow during continuous movement of the object along the axis. The polymerization and curing of the photopolymer occurs within parts of the photopolymer volume, the maximum volume of which is concentrated at some predetermined distance from the surface of the optical interface. More photopolymer near the construction surface is reserved in the uncured state without the use of any inhibitors or auxiliary reagents.

The mobility of the boundary layer in contact the plane of the optical interface provides an easy overcoming of the adherence of the formed object to the surface of the optical interface under the influence of atmospheric pressure, the free flow of fresh portions of the photopolymer into the exposure region and the possibility of a rapid continuous formation of a quality object.

The fact that in the method for forming a three-dimensional object from the liquid photopolymer in the projection of an elementary section by actinic radiation, the elementary section is divided into fragments, each of which is controlled separately.

For example, exposure of the fragments is carried out alternately and/or at different specific radiative intensities and speed of the formation of objects, improving the quality of the objects and expanding the functionality of the method, as it provides the opportunity of high speed, uninterrupted, continuous object formation using any photopolymer system, regardless of polymerization type.

It is explained by the following. Individual control of the exposure parameters of each fragment, for example, selective or alternate exposure of fragments with different specific radiative intensities, makes it possible to achieve advanced curing of individual fragments of the formed object having contact with the surface of the optical interface and significantly reduce the momentary force necessary to overcome the adhesion of fragments of the formed object to the surface optical interface in the process of continuous movement of the object along the axis of construction for a substantial reduction in the total area of the fragments formed.

The causal relationship between the set of essential features of the device for forming a three-dimensional object from a liquid photopolymer and the technical result achieved is as follows.

The fact that in the device for forming a three-dimensional object from a liquid photopolymer, the optical interface is made in the form of at least one wavefront transformer of actinic radiation, in the region of the focus plane of which an optically transparent element intended for contact with the photopolymer is placed in combination with known features provides an increase in the speed of the formation of objects, improving the quality of objects and expanding the functionality of the device, a possibility of high-speed continuous formation of objects using any photopolymer system, regardless of polymerization type.

It is explained by the following. Such an implementation of the optical interface makes it possible to provide a given spatial distribution of the energy of actinic radiation in the volume of the object formation zone and to keep part of the photopolymer in the volume of the formation zone unexposed. This ensures a permanent presence of a liquid photopolymer in the construction area and its rapid continuous inflow into the exposure area with a continuous movement of the object along the construction axis.

The causal relationship between a set of developing essential features of the device for forming a three-dimensional object from a liquid photopolymer and the technical result achieved is as follows.

The fact that in the device for forming a three-dimensional object from a liquid photopolymer, the wavefront converter of actinic radiation is made in the form of a matrix of microlenses adjacent to each other and placed in a single layer on a common base of an optically transparent material in combination with known features, improving the quality of the objects and expanding the functionality of the device, as it provides the possibility of high-speed and continuous object formation using any photopolymer system, regardless of polymerization type.

It is explained by the following. The implementation of the wavefront converter in the form of a microlens matrix allows to achieve a given spatial distribution of the energy of actinic radiation in the volume of the object formation zone and to keep part of the photopolymer in the volume of the formation zone unexposed, this ensures a constant presence of a liquid photopolymer in the construction volume and its rapid continuous inflow into the exposure region with continuous moving the object along the axis of construction.

The fact that the wavefront transformer of actinic radiation is made in the form of a holographic optical element, for example, in the form of a Fresnel zone plate matrix, a flat phase or amplitude hologram, a volume phase transmissive hologram, a holographic lens matrix, a phase synthetic hologram or a Fresnel microlens matrix, in combination with known features increase the speed of object formation, improve the quality of object and expand the functionality of the device, as it provides an opportunity for high speed continuous object formation using any photopolymer system, regardless of the type of polymerization.

It is explained by the following. The implementation of a wave front converter in the form of a Fresnel zone matrix, a flat phase or amplitude hologram, a volume phase transmissive hologram, a matrix of holographic lenses, a phase synthetic hologram or a Fresnel microlens matrix allows attainment of a given spatial distribution of the energy of actinic radiation in the volume of the object formation zone and storing part of the photopolymer in the volume of the formation zone is unexposed, which ensures a constant presence of a liquid photopolymer in the construction area.

In the case when the source of actinic radiation is a source of coherent radiation, it becomes possible to form a holographic field in the region of object construction in the form of a spatial interference pattern with a given spatial distribution of the energy of actinic radiation, which allows achieving a given spatial distribution of the energy of actinic radiation in the volume of the object formation zone and to keep part of the photopolymer in the volume of the formation zone that is not exposed, which provides a presence of liquid photopolymer in the area of construction.

The fact that an optically transparent element intended for contact with a photopolymer is made in the form of a membrane of a thin film or in the form of a plate in combination with known features provides an increase in the speed of the formation of objects, an improvement in the quality of the objects formed and the expansion of the functionality of the device, continuous formation of objects using any photopolymer system, regardless of the type of polymerization.

It is explained by the following. The performance of an optical transparent element intended to contact the photopolymer as a membrane of a thin film or as a plate allows the photopolymer to be held in the focus region of the wave front converter.

The fact that an optically transparent element intended for contact with a photopolymer is made in the form of a membrane of a thin film or in the form of a plate that is a wavefront converter, in combination with known features, provides an increase in the speed of object formation, an improvement in the quality of the object formed and an expansion of functionality device, as it provides the possibility of high-speed continuous object formation using any photopolymer system, regardless of the type of photopolymer.

It is explained by the following. The presence of an optically transparent element intended for contact with the photopolymer, made in the form of a membrane of a thin film or in the form of a plate that is a converter of the wave front of actinic radiation, allows the photopolymer to be held in the focus region of the wave front converter and optimizes the process of heat exchange with the surrounding medium.

The fact that the device for forming a three-dimensional object from a liquid photopolymer further comprises a temperature maintaining unit for an optically transparent element intended to contact the photopolymer, in combination with known features, increases the speed of object formation, improves the quality of the objects formed and enhances the functionality of the device, which allows the possibility of high-speed continuous object formation using any photopolymer system, regardless of type of polymerization.

It is explained by the following. The presence of a temperature maintenance unit will control the viscosity of the photopolymer, which depends on the temperature, and remove the excess heat released during its polymerization.

The fact that the optically transparent element intended for contact with the photopolymer can be made with the possibility of performing oscillatory movements in combination with known features provides an increase in the speed of forming objects, improving the quality of the objects formed and expanding the functionality of the device, since it provides the possibility of high-speed continuous object formation with the use of any photopolymer system, regardless of the type of polymerization.

It is explained by the following. The performance of an optically transparent element intended for contact with the photopolymer, with the possibility of performing oscillatory movements, makes it possible to control the process of detachment of the fragments of the formed object from the surface of the transparent element intended for contact with the photopolymer to intensify the process of transferring fresh portions of the photopolymer to the object formation region.

The vibrations of the membrane transfer the photopolymer along the surface of the optical interface, which allows the increase of speed of the object formation due to the more intensive inflow of the photopolymer into the region of object formation.

The fact that the device for forming a three-dimensional object from a liquid photopolymer contains at least two actinic radiation wavefront converters that form an optical interface, in combination with known features, provides an increase in the speed of object formation, an improvement in the quality of the objects formed and the expansion of the functionality of the device, since it provides the possibility of high-speed continuous object formation using any photopolymer system, regardless of the type polymerization.

It is explained by the following. The presence of an optical interface of two or more wavefront converters makes it possible to effectively use transparent modulators of actinic radiation, for example, flat liquid crystal matrices, and to ensure the exposed section of the object is focused through the temperature maintenance unit.

The fact that the device for forming a three-dimensional object from a liquid photopolymer contains at least two actinic radiation wavefront converters that form an optical interface, wherein at least one wavefront converter of actinic radiation is made in the form of a holographic optical element, for example, in the form of a transmissive or reflective hologram, in combination with known features, provides an increase in the speed of forming objects, improving the quality of the objects and expansion of the functionality of the device, enables high-speed continuous object formation using any photopolymer system, regardless of polymerization type.

It is explained by the following. The presence of an optical interface of two or more wavefront converters in the case where at least one wavefront converter of actinic radiation is made in the form of a holographic optical element, for example in the form of a transmissive or reflective hologram, makes it possible to effectively use transparent modulators of actinic radiation, for example, flat liquid crystal matrices, and to ensure that the exposed cross section of the object is focused through the temperature maintenance unit. In the case when the source of actinic radiation is a source of coherent radiation, it becomes possible to form a holographic field in the region of object construction in the form of a spatial interference pattern with a given spatial distribution of the specific radiative intensity, which will allow achieving a given spatial distribution of the specific radiative intensity in the volume of the object formation zone and preserve part of the photopolymer in the volume of the formation zone is unexposed. This ensures a constant presence of a liquid photopolymer in the construction area.

The fact that the device for forming a three-dimensional object from a liquid photopolymer contains at least two sources of actinic radiation whose projection axes form the same or different angles with the plane of the optical interface, in combination with known features, provides an increase in the speed of forming the objects, improving the quality of the objects and the expansion of the functionality of the device, as it provides the possibility of high-speed continuous object formation using any photopolymer system, regardless of polymerization type.

It is explained by the following. When two or more sources of actinic radiation are used whose projection axes form the same or different angles with the plane of the optical interface, in the case where the sources of actinic radiation operate at the same wavelength and each of the sources provides exposure to its part of the cross-sectional area, it is possible to provide exposure to a larger area on the construction plane.

In the case when at least one of the sources of actinic radiation is a source of coherent radiation, it becomes possible to form a holographic field in the region of object construction in the form of a spatial interference pattern with a given spatial distribution of the specific radiative intensity, which allows to save part of the photopolymer in the volume of the formation zone that is not exposed, providing a permanent presence of a liquid photopolymer in the construction area.

BRIEF DESCRIPTION OF THE DRAWINGS

To explain the essence of the invention and explain the achievement of the technical result, the following figures are given by the features of the claimed method and the device for its implementation.

FIG. 1 shows a diagram of the device for forming the three-dimensional object from a liquid photopolymer.

FIG. 2 shows the distribution of the energy density realized by an elementary focusing element of a wave front converter (for example, a microlens).

In FIG. 3 it is shown that when using the wavefront converter of actinic radiation, the bulk of the volume of the photopolymer near the surface of the optical interface proves to be practically nonexposed.

FIG. 4 shows that as a result of transformation of the wave front of actinic radiation, the configuration of the cured part of the object in the construction area has a regular relief structure.

FIG. 5 shows the means for realizing the transformation of the wavefront - an array of hemispherical microlenses of square shape.

FIG. 6 shows the means for realizing the transformation of the wave front - a holographic optical element, such as phase synthetic hologram, which is an array of microscopic Fresnel lenses of square shape.

FIG. 7 shows an embodiment of the device when the surface of the optical interface is made in the form of an optically transparent elastic or weakly abrasive membrane made of a film disposed over the planar wavefront of the actinic radiation and when the structure further comprises a reservoir filled with a heat transfer fluid and combined with an optical interface to maintain a predetermined surface temperature of the optical interface.

FIG. 8 shows an example of an device, wherein one of the wavefront converting elements (or array of microlenses hologram element) is used for pre-focusing of the projection element of the object, which is formed by the LCD matrix, and a second holographic element is used for converting the wavefront in the plane building objects.

FIG. 9 shows that an optically transparent element intended for contact with a photopolymer is made in the form of a membrane of a thin film or plate, which is also a wavefront converter.

FIG. 10 shows an optical interface plate having a composite structure.

FIG. 11 shows that an optically transparent element intended for contact with the photopolymer which is configured to perform forced oscillatory movements.

FIG. 12 shows an embodiment of a device for forming three-dimensional objects from a liquid photopolymer, in which arrangement the device is configured so that movement of constructing a downward direction along a vertical axis, and the formed object is immersed in a container of a photopolymer or a container with a liquid, the surface of which is a photopolymer.

FIG. 13 shows a device for implementing the method of the present invention in the form of a replaceable assembly containing components and reagents necessary for the implementation of the method.

FIG. 14 shows a device for implementing the method of the present invention implemented as a complete software and hardware complex.

FIG. 15 shows an embodiment of the device for forming the three-dimensional object from a liquid photopolymer, comprising two sources of actinic radiation whose projection axes form the same or different angles with the plane of the optical interface.

FIG. 16 shows a device for implementing the method of the present invention in which an optically transparent element intended to contact the photopolymer and a wavefront converter form a sealed connection in such a way that a cavity between them communicates with a separate reservoir by means of a conduit for circulation and / environment and regulating its flow are used valves, cranes, pumps of various types.

FIG. 17 shows a micrograph of an array of microlenses of PMMA hexagonal shape.

FIG. 18 shows a micrograph of an array of hologram microlenses of square shape.

FIG. 19 shows a micrograph of an array of hologram microlenses of hexagonal shape.

FIG. 20 shows the result of the practical implementation of the claimed method implemented by the claimed device, as in Example No I.

FIG. 21 is the same as in example No 2.

FIG. 22 is the same as in the example of No 3.

FIG. 23 is the same as in the example No 4.

The present invention has been described with reference to the accompanying drawings, in the following non-limiting description. Identical numbers refer to the same elements throughout the description. In the drawings, the thickness of certain lines, layers, components, elements or features may be exaggerated for clarity. Broken lines illustrate additional functions, operations or processes.

As used herein, the term "and/or" includes all possible combinations, the term "or" means "one of".

Unless otherwise stated, all technical and scientific terms used have the same meaning as commonly understood by one of ordinary skill in the art to which it belongs. Well-known functions or constructions may not be described in detail.

It should be understood that when the examples of technological options, technical solutions, materials used, modes of operation are listed, the list is not limiting, unless otherwise specified.

The term "optically transparent" implies transparency for actinic radiation in the spectral region having a functional value for the curing process of the photocurable system.

It should be understood that when an element is referred to as "located", "connected", "linked", "having a contact," etc., with another element, communication may be effected by elements not participating in the description, the term "directly" implies communication without the use of intermediate elements.

Spatially relative terms "up", "down", "vertical", "horizontal", etc. are used only for description, unless otherwise specified.

The sequence of operations (or steps) is not limited to the order indicated in the claims or to the description sequence, unless otherwise indicated.

The method and device described in this invention involve the use of liquid photopolymers (liquid photocurable systems) that are combined by a common property - their aggregate state changes under the influence of actinic radiation: from liquid to solid form. The general name "photopolymers" is used for brevity. The choice of a liquid photocurable system is carried out proceeding from requirements to properties of objects and area of their application.

A list of liquid photocurable systems that can be used in the method and device of the present invention includes, but is not limited to: -systems cured by a radical polymerization method, for example acrylics, acrylamides, various functionalized oligomers, etc., some examples of liquid systems, monomers and curing initiators are described in US Pat. Nos. 8232043, 8119214, 7935476, 7767728, 7649029, WO 2012129968A1, JP 2012210408 A, CN 10271 5751 A; - compositions containing monomers suitable for acid curing, such as, for example, epoxy, vinyl, ethers, etc. (see, for example, US Pat. Nos. 7,824,839, 7,550,246, 7,534,844, 5,374,500, 6,692,891);

- photocurable silicone resins, for example, for medical devices;
- photocurable polyurethanes, allowing, for example, to produce strong objects with varying degrees of elasticity;
- photocurable resin for casting on melted / burned models;
- photocurable hydrogels, such as polyethylene glycols and gelatins;
- polymerizable liquids carrying living cells, for example, but not only forming the hydrogel described in US Pat. No. 7,651,883, 7,651,682, 7,556,490, 6,602,975, 5,836,313, etc .;
- photocurable sol-gel compositions capable, for example, after forming the object by the method of three-dimensional printing, as a result of subsequent calcination, to form carbon-containing glass-ceramic and ceramic objects, some are described in US Patents 4,765,818, 770,997, 7,108,947, 8242299, 7368514, 8147918;
- biodegradable resins for implantable devices used, for example, for drug delivery or for biodegradable stents, described, for example, in US patents 6932930, 7919162.

The photocurable systems can contain additional ingredients, for example, in the form of microobjects of various dimensions, fillers, colorants, hardening additives, carbon microfibers, ferromagnets, paramagnetic substances, metals, luminophores, drugs, microbial cultures, living cells; these can be various organic fillers, microcapsules and nanopobjects, or combinations thereof.

The claimed method for forming a three-dimensional object from liquid photopolymer is realized by a device that contains at least one actinic radiation source 1, a container 2 for placing the photopolymer 3 with a transparent window for the optical interface 4, and a movement mechanism 5 for the formed object 6. The optical interface 4 is made in the form, at least, one wavefront converter 7, in the region of the focus plane of which an optically transparent element 8 intended for contact with the photopolymer 3 is disposed.

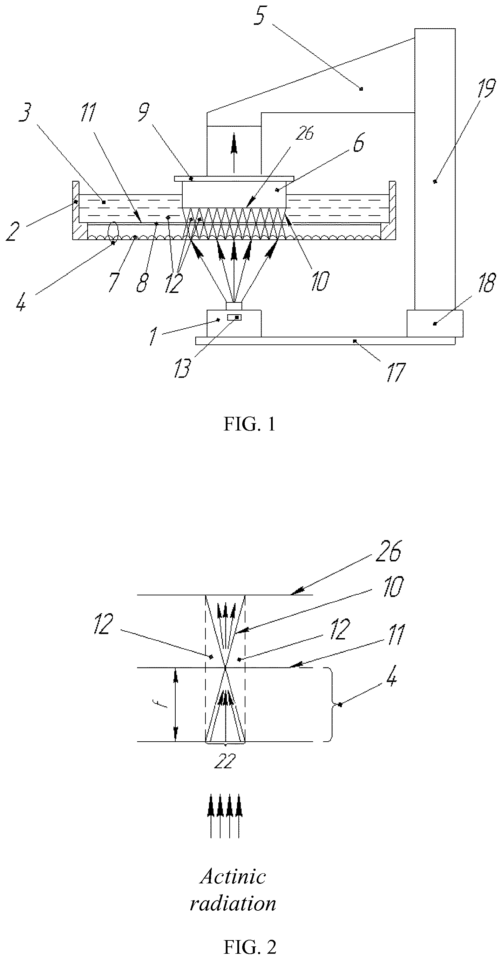

The molded object 6 is fixed to a movable carrier platform 9. The surface of the object 6 facing the optical interface 4 is the construction surface 10 and the surface of the photopolymer's engagement in the exposure region (see FIG. 1).

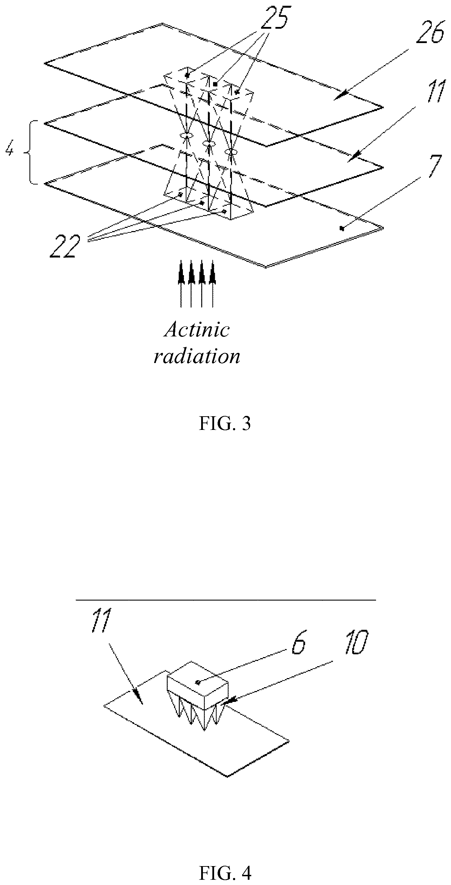

The optical interface 4 - the window in the container 2 with the photopolymer 3 intended for the exposure of the photopolymer 3 can be made in the form of a unitary element with a composite structure, or it can have a composite structure of several assembly units, including fastening elements, seals, etc. (not shown in figures). The optical interface 4 is fixed to the container 2 for the photopolymer 3 (the fastenings are not shown in the figure). The surface of the optical interface 4 facing the photopolymer 3 forms the surface 11 of the optical interface 4 or, which is the same, the plane of the optical interface 4 (see FIG. 3).

The region of the volume of the photopolymer 3 between the construction surface 10 and the surface 11 of the optical interface 4 is a movable boundary region 12, or, equivalently, the construction area, or that the same movable boundary zone (see FIG. 2).

The optical interface design options will be discussed in more detail below.

The actinic radiation source 1 is preferably an electrical radiation source, in particular an ultraviolet radiation source. Any suitable source of actinic radiation can be used, for example, an incandescent lamp, a mercury lamp, a fluorescent lamp, a laser, an LED, etc., including assembling the listed devices.

The actinic radiation source 1 should preferably comprise an element 13 for spatially modulating actinic radiation, for example, a liquid crystal display (LCD), a spatial modulator in the form of a micromirror array, or other suitable system known to those skilled in the art. The spatial modulator is controlled by a controller, for example, it can be a general-purpose computer equipped with an appropriate software (see, for example, US Pat. Nos. 6,312,134, 6,248,509, 6,238,852, and 5,691,541).

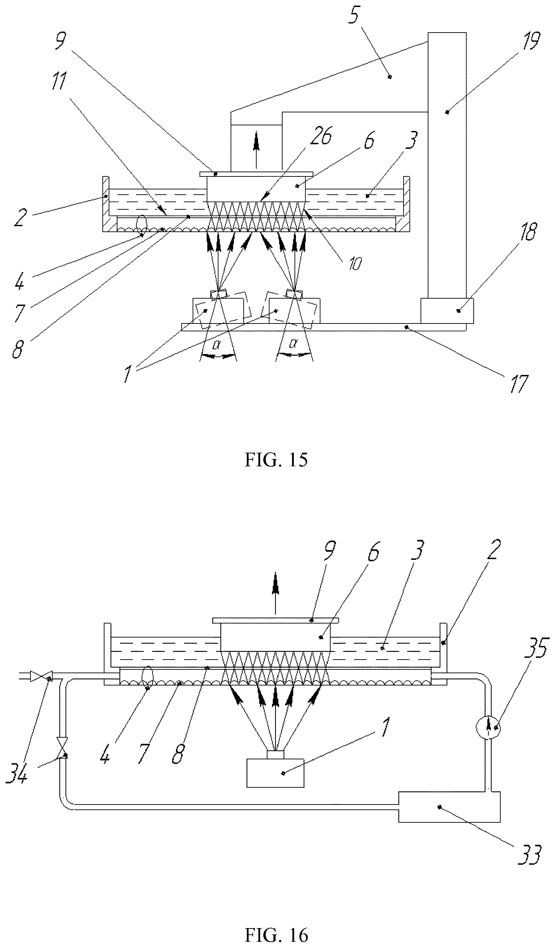

The device for forming a three-dimensional objec from a liquid photopolymer may contain one, two or more sources 1 of actinic radiation. FIG. 15 shows a non-exclusive embodiment of a device for forming a three-dimensional object from a liquid photopolymer containing two actinic radiation sources 1 whose projection axes form the same or different angles with the plane of the optical interface 4.

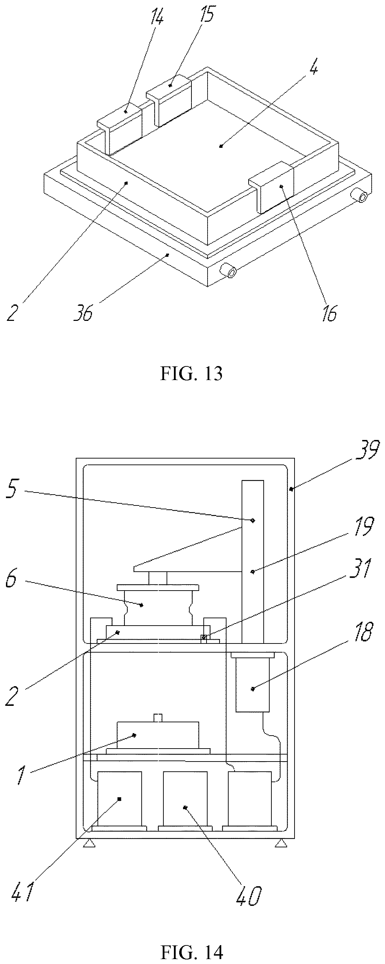

The container 2 for accommodating the photopolymer 3 can have dimensions, additional positioning and fastening elements (not shown in the figure), etc., which are defined in the general construction, etc. The container 2 for placing the photopolymer 3 can be provided with photopolymer level sensors 14, temperature sensors 15, replenishment unit 16 the level of the photopolymer 3, etc. (see Figure 13). Any suitable sensors can be used, based on their design and permissible operating conditions. The container 2 for positioning the photopolymer 3 can be made of any suitable material capable of maintaining stable dimensions and withstand contact with the photopolymer composition, for example, it can be metals and metal alloys such as aluminum or stainless steel, composite materials, for example, based on carbon fibers, plastics, for example, polyethylene, polypropylene or fluoroplastic, etc., or compositions of all of the above.

The movement mechanism 5 of the object 6 can preferably be a system from a stepper motor 18 arranged on a common base 17 with a screw reducer 19 connected to the movable carrier platform 9 of the object 6 to be formed (see FIG. 1). Alternative embodiments of the movement mechanism are possible, for example in the form of a linear electric motor, a hydraulic system, a coil-to-gear drive, and others known to those skilled in the art (not shown in the drawing).

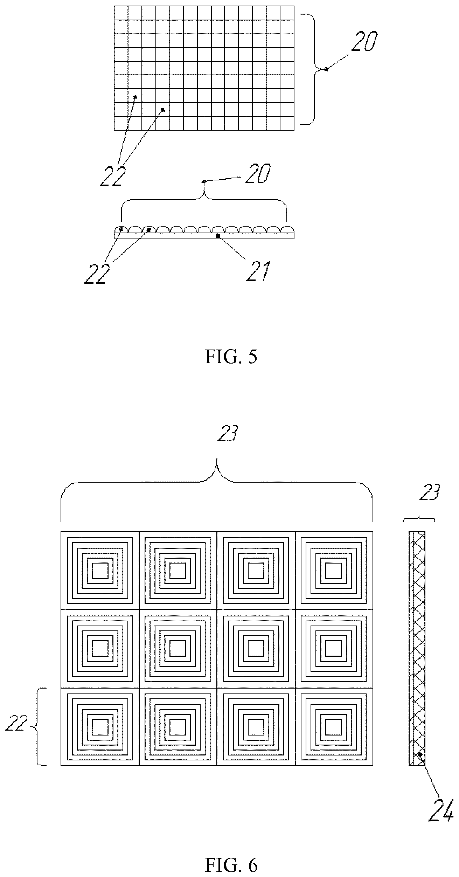

The wavefront converter 7 can be made in the form of a matrix 20 of microlenses adjacent to the sides and arranged in a single layer on a common base 21 of an optically transparent material. One microlens is an elementary focusing element 22 of the wave front converter 7. A non-exclusive example of an array (array) 20 of microlenses is shown in FIG. 5.

The wavefront converter 7 can also be implemented as a holographic optical element 23, which is, for example, a Fresnel zone plate matrix, a flat phase or amplitude hologram, a bulk phase transmissive hologram, a holographic lens matrix, a cineform or a Fresnel microlens matrix. Any suitable technology can be used to produce the holographic optical element 23, for example recording holograms in optical media, such as, for example, photopolymer media for recording holograms or dichromated gelatin based media, embossing thermoplastic polymers, vacuum deposition, etching, construction by electron beam scanning, and others known to those skilled in the art. One hologram microlens, a Fresnel microlens and/or any other element of the wave front converter is an elementary focusing element 22 of the wave front converter 7. A non-exclusive example of an array of Fresnel hologram microlenses on a plate-shaped carrier 24 is shown in FIG. 6.

Elementary focusing elements 22 of the wave front converter 7, such as microlenses, Fresnel microlenses, hologram lenses, can have various shapes, for example, but not only the shape of rectangles, triangles, hexahedrons and sides sizes from 1 to 10 $\mu$m or from 10 to 100 $\mu$m

The plane in which the matrix 25 of the elementary focusing elements 22 are combined will be referred to below as the reference plane 26 of the construction of the object 6 (see FIG. 3).

The wave front converter 7 can be provided on the carrier 24 in the form of a film having a thickness of 5 to 500 $\mu$m, or as a plate, for example 0.5 to 20 mm in thickness, from any suitable material such as, for example, mineral glass, acrylic glass, polycarbonate, lavsan, polyethylene terephthalate and other materials known to a person skilled in the art.

The device for forming the three-dimensional object 6 from the liquid photopolymer 3 may comprise at least two wavefront transformers 7 of the actinic radiation that form an optical interface. In this case, if two actinic radiation wavefront converters 7 form an optical i, then at least one wavefront converter 7 of actinic radiation can be made in the form of a holographic optical element 23 transmitting either a reflective hologram.

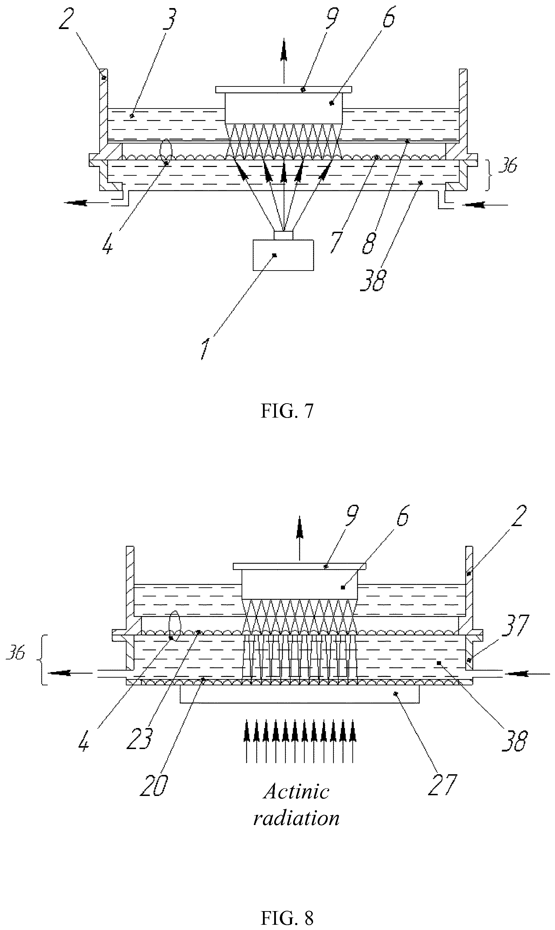

In FIG. 8, a non-exclusive embodiment of the device is shown wherein one wavefront conversion element 7 representing the array 20 of microlenses is used to pre-focus the projection of the object 6 that is formed by the transparent LCD array 27 and the second holographic optical element 23 is used to convert the wave front in the area of building 12 of object 6 in accordance with the principle described above.

The optically transparent element 8 intended for contact with the photopolymer 3 can be made as an optically transparent membrane of a film having a thickness of 5 to 40 $\mu$m or 40 to 100 $\mu$m arranged in parallel with the actinic radiation wavefront converter 7, as shown in FIG. 1. The distance between the optically transparent element 8 intended to contact the photopolymer 3 and the wavefront converter 7 can be 0.1 to 1 $\mu$m or 1 to 10 $\mu$m or more. The tension of the membrane can be provided by the structure of the attachment assembly, for example, by the shape of the flanges of the clamping element (not shown in the figure). Mounting devices may be used to pre-tension the diaphragm (not shown in the drawings). The membrane film can be made from any suitable polymer, such as lavsan, polypropylene, polyethylene or other polyolefins, for example, polymethylpentene (TPX ™) commercially available from Mitsui Chemicals, Inc., a fluoropolymer, for example PTFE (Teflon®) commercially available from DuPont, silicone rubber, etc.

The optically transparent element 8 intended for contact with the photopolymer 3 can be made in the form of a plate having a thickness of 0.1 mm to 10 mm arranged in parallel with the wavefront converter 7 of the actinic radiation. The plate can be made of any suitable material, such as glass, quartz glass, acrylic glass. The outer surface of the plate may have a fluoropolymer coating, for example TEFLON AF® commercially available from DuPont, an organosilicon coating, for example PDMS based compositions commercially available from Dow Corning, et al.

In the claimed invention, an optically transparent element 8 may combine other useful functions with the function of the wavefront converting of actinic radiation; and the elements of macrorelief and microrelief, internal microcavities and macrocavities, micro- and nanoinclusions and micropores, as well as areas with different coefficients of refraction, different optical density and the transmission coefficients of actinic radiation can serve to realize those additional functions. For example, the optically transparent element 8 intended to contact the photopolymer 3 can simultaneously be a wavefront converter 7.

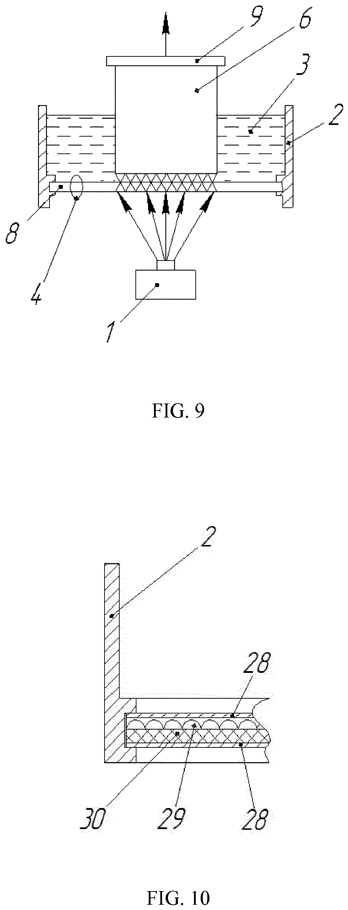

In FIG. 9, an optically transparent element 8 intended to be in contact with the photopolymer 3 can be made in the form of a membrane of a thin film or plate, which is also a wave front converter 7. A non-exclusive example of the construction of an optically transparent element 8 aligned with the wave front converter 7 as a composite structure is shown in FIG. 10. The optical interface plate 4 has a composite structure comprising: a protective layer 28, the hologram layer 29, a film or plate the carrier layer 30. As the material of carrier layer 30 can be used, such as quartz glass or acrylic glass, polyethylene terephthalate, and others. The protective layers 28 can be made, for example, from a fluoropolymer, for example TEFLON AF® commercially available from DuPont, or a DOW Corning PDMS based composition that can be applied by any of the known methods, for example by applying a liquid monomer its subsequent polymerization, applying the polymer solution followed by its drying and/or metal oxide deposited by the sputter, for example, may be used zinc oxide, aluminum oxide and others.

The optically transparent element 8 intended to contact the photopolymer 3 can be configured to perform oscillatory movements. It is known that a stretched membrane is capable of performing harmonic oscillations similar to a stretched string. In this case, we mean a design in which any effect on the membrane surface can cause its damped oscillations. The ability to oscillate also means that there is some free space within which vibrations can be made, for example, the vibration space can be 0.1 to 1 $\mu$m or 1 to 10 $\mu$m or more along the vertical axis to the surface of the optical interface 4. The diaphragm tension can be provided by the structure of the attachment assembly, for example by the shape of the flanges of the clamping element (not shown in the figure). Also, devices for pre-tensioning the membrane (not shown in the figure) may be used to mount the device.

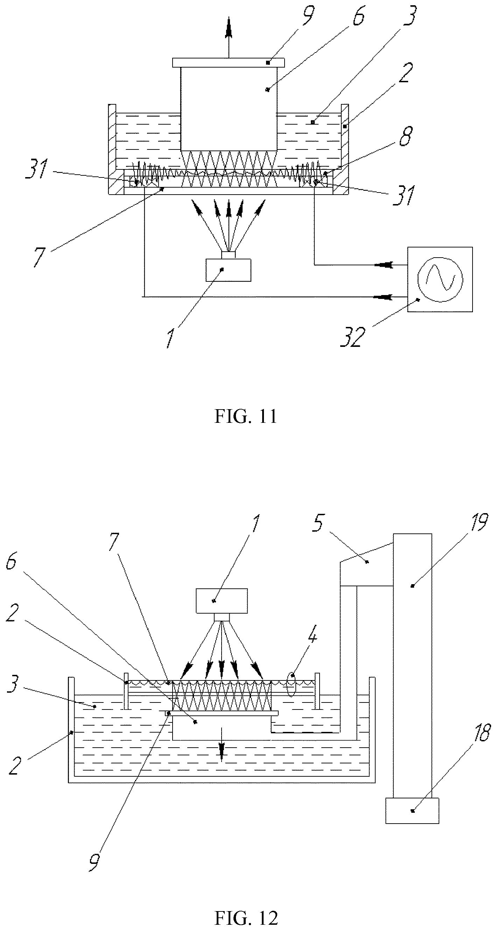

The optically transparent element 8 intended to contact the photopolymer 3 can be configured to perform forced oscillatory movements that can be caused by the transfer of mechanical energy from one or more sources of vibration 31, for example mechanical, acoustic and/or ultrasonic vibrations (see FIG. 11). The oscillations in the plate or the vibrations of the membrane of the optically transparent element 8 can propagate in the form of longitudinal and/or transverse waves. The nature of such oscillations is determined by the frequency, properties of the material and the oscillatory system as a whole. The oscillation source 31 may be an electromagnetic or piezoelectric transducer of suitable dimensions and power receiving an electrical signal from the signal generator 32.

In the device according to the invention, the optically transparent element 8 intended for contact with the photopolymer 3 may contain on its surface or in the volume an ordered or chaotic nano- or microstructure in the form of cavities, depressions or pores (not shown in the drawings).

Such a structure can be formed, for example, by etching, embossing, engraving, including laser, or as a result of the manufacturing process, for example, the process of pore formation.

To prevent the fragments of the formed object 6 from adhering to the material of the optically transparent element 8 intended to contact the photopolymer 3, liquids that do not wet the cured photopolymer 3 but wet the material of the optical interface 4 can be used. For example, an optically transparent element 8 intended to contact photopolymer 3 can be made in the form of a microporous film (plate) with a textured hydrophilic surface having microdimensional (capillary) grooves (not shown in the drawings) containing a liquid, for example, but not only, an aqueous liquid, can also be a converter 7 of the wave front of actinic radiation.

The optically transparent element 8 intended to be in contact with the photopolymer 3 and the wavefront converter 7 can form a sealed connection, for example, seals or sealed seals arranged around the perimeter of these elements (not shown in the drawings) can be used.

The optically transparent element 8 intended to contact the photopolymer 3 and the wavefront converter 7 can form a leaking connection, for example, a gas permeable separator led as a spacer between these elements along their perimeter (not shown in the drawings) can be used.

The optically transparent element 8 intended to contact the photopolymer 3 and the wave front converter 7 can form a sealed connection so that a cavity therebetween communicates with a separate reservoir 33. Such a connection can be carried out using a conduit using valves 34 and pump 35. Not an exemplary embodiment of the device is shown in FIG. 16.

The device for forming a three-dimensional object from a liquid photopolymer may further comprise a temperature maintaining unit 36 for an optically transparent element 8 intended to contact the photopolymer 3. This may be a reservoir 37 filled with a heat transfer medium 38 and aligned with an optical interface 4 (see FIG. 7 and FIG. 8). In this case, the temperature maintaining unit 36 of the optically transparent element 8 intended to contact the photopolymer 3 can provide both cooling and heating of the surface of the optical interface 4 and/or the photopolymer 3.

Circulation of the heat transfer medium 38 to external heating and/or cooling devices can be arranged. The circulation of the heat carrier 38 can be arranged, for example, by means of a pump. The temperature of the heat transfer medium 38 and/or the photopolymer 3 can be maintained at a predetermined level by any known method: heating by means of thermoelectric resistance heaters, infrared sources, Peltier elements, heating and cooling by means of a compressor refrigeration machine, etc. Water, organic liquids, their combinations, aqueous and non-aqueous solutions of salts. The specific type of heat carrier 38 can be selected based on a predetermined temperature range and other application conditions. An important requirement for heat carrier 38 is its high permeability in the region of the spectrum of actinic radiation. It is also possible to maintain the temperature using a suitable gas mixture or air as the heat carrier 38. Any of these solutions are known to those skilled in the art.

The inventive method for forming a three-dimensional object 6 from a liquid photopolymer 3 cured by actinic radiation includes performing a projection of the elementary section with actinic radiation, continuous exposure of a sequence of elementary sections, moving the formed object 6 along the construction axis, forming an object 6 from the movable boundary region 12 of the photopolymer 3. The mobility of the boundary the regions 12 of the photopolymer 3 are provided in that the wavefront of the actinic radiation is transformed so that That the radiation power density on the exposed areas have a gradient along the axis of the construction, in which the movable boundary region 3 photopolymer 12 is exposed partially.

The projection by actinic radiation by means of a corresponding program function for processing models of elementary sections of object 6 can be formed in such a way that each elementary section is divided into fragments, the exposure of which is carried out alternately, with smooth or abrupt transitions, either using a luminance gradient or with pauses in the exposure, or all of the above techniques are applied simultaneously, or in any other combinations, and the minimum fragment size can be one pixel image.

The arrangement of the device can be configured such that the movement of the construction is directed upwards along the vertical axis when the object to be formed 6 is extracted from the container 2 for the photopolymer 3. An example of such an implementation of the device is shown in FIG. 1.

The arrangement of the device may be designed such that the construction movement is directed downward along the vertical axis when the formed object 6 is immersed in the container 2 with the photopolymer 3 or into a container with a liquid on the surface of which the photopolymer 3 is located. An example of such an implementation of the device is shown in FIG. 12.

The device for implementing the method of the invention can be made in the form of a replaceable unit containing components and reagents necessary for the implementation of the method.

An example of such an implementation of the device is shown in FIG. 13.

The device in this embodiment can include, but is not limited to, the photopolymer container 3, the optical interface 4, the photopolymer level sensor 14, the photopolymer level replenishment unit 16, the temperature maintaining portion 36, the oscillation source 31, etc. In this case, the device can be used as part of any suitable system for constructing an object 6 from a liquid photopolymer 3 cured by actinic radiation

The device for implementing the method of the invention can be implemented as a complete software and hardware complex, for example, comprising: a supporting frame 39, containers 2 for a photopolymer 3, an external reservoir 40 for a heat transfer medium 38, pumps 41 for pumping thereof, sources 31 of mechanical, and / or ultrasonic vibrations, a mechanism 5 for moving the formed object 6, electrical circuits, controllers, temperature control means for cooling and heating, one or more, actinic radiation sources 1 and/or actinic monochromatic coherent radiation 1, calibration and configuration tools. Such an embodiment of the device may also include the use of a general-purpose computer in which the necessary software is started (FIG. 14).

BEST MODE FOR CARRYING OUT THE INVENTION

The claimed device operates as follows, realizing the claimed method: turn on an actinic radiation source 1 with spatial modulation,
form an elementary projection of the object 6,
perform a continuous exposure in the form of a sequence of elementary cross sections of the object 6 with actinic radiation, and
simultaneously move the formed object 6 along the construction axis.
The formation of the object 6 occurs from the mobile boundary region 12, while the mobility of the boundary region 12 is provided by converting the wavefront of actinic radiation in such a way that in this zone photopolymer 3 is partially exposed.
The transformation of the wave front of actinic radiation provides polymerization and curing of the photopolymer 3 within parts of the volume of the photopolymer 3, the maximum volume of which is concentrated at a certain, predetermined distance from the surface 11 of the optical interface 4 (FIG.3). Near the surface of the optical interface 4, a larger amount of photopolymer 3 is not exposed and stored in an uncured state without the use of any inhibitors or auxiliary reagents.
The small contact area of the fragments of the formed object 6 with the surface 11 of the optical interface 4 and the mobility of the interface of the optical interface 4 bordering the surface 11 of the photopolymer 3 provides an easy overcoming of the adherence of the formed object 6 to the surface 11 of the optical interface 4 and the free flow of fresh portions of the photopolymer 3 into the exposure region in the process continuous forming of the object 6 (FIG.4).
The optical interface 4 includes at least one element that converts the wavefront of actinic radiation, which forms the projection of the object. FIG. 2 shows the energy distribution realized by the elementary focusing element 22 of the wavefront converter 7, for example, by a microlens. The energy of the actinic radiation incident on the area of the elementary focusing element 22 of the wave front converter 7 in the plane of the surface 11 of the optical interface 4 is concentrated in an area much smaller than the area of the elementary focusing element 22 and is then distributed to the original area in the base plane 26 of the object 6.
When the actinic radiation wavefront converter 7 is used as an array of elementary focusing elements 22, the area of the contact portions of the fragments of the formed object 6 with the surface 11 of the optical interface 4 (Sp) is mainly determined by the position of the surface 11 of the optical interface 4 relative to the focus point of the elementary focusing element 22, aberrations of the elementary focusing element 22, structural imperfection, diffuse scattering of actinic radiation in the material optically transparent element 8 intended for contact with the photopolymer 3. It has been experimentally established that the magnitude of the exposure spot (Sp) on the surface 11 of the optical interface 4 is about 25 $\mu$m2, so for Sp = 25 $\mu$m2, when using an element square focusing element with the dimensions of 30 x30 $\mu$m, i.e. an area of Sel = 900 $\mu$m2, the ratio of areas Kel =Sel/Sp is Kel = 900 $\mu$m2/25 $\mu$m2 = 36; or when using an elemental focusing element of square shape with dimensions 40 x40 $\mu$m (Sel = 1600 $\mu$m2), K el = 1600 $\mu$m2 / 25$\mu$m2 = 64.
The Kel coefficient is valid for the entire area of the optical interface 4. This means that the total exposure area on the surface 11 of the optical interface 4 and, accordingly, the contact area of the object fragments 6 with the surface 11 of the optical interface 4 is smaller than the sectional area of the formed object 6 in 36 and 64 times, respectively.
The fact that in forming the projection of the cross section of object 6 by actinic radiation, the elementary section is divided into fragments, the exposure of which is carried out alternately, provides a significant reduction in the instantaneous adherence of the formed object 6 to the surface 11 of the optical interface 4 during the continuous movement of the object 6 along the construction axis due to a significant reduction of the total area of the fragments of the object 6 having contact with the surface 11 of the optical interface 4 at each time point.
This is achieved by the following means: As a result of special software processing, each projection of the cross section of the formed object 6 within the exposed part contains separate fragments - pixels and / or groups of pixels in which the instantaneous level of brightness of actinic radiation is higher than the rest of the exposed cross-sectional area, the projection of the cross-section is the arrangement of such pixels and / or groups of pixels.
The degree of curing of the photopolymer 3 in areas with more intense instant exposure is higher, and the adhesion of the photopolymer 3 to the surface 11 of the optical interface 4 occurs primarily in these regions. Since the movement of the object 6 is continuous, the immediate detachment of the fragments of the object 6 from the surface 11 of the optical interface 4 occurs precisely in these regions.
As was shown above, the instantaneous area of contact areas, due to the transformation of the wave front of actinic radiation, is 36-64 times less than the area of the exposed section. In addition, with the advanced curing of the photopolymer 3, for example in half of the contact areas of the fragments of the formed object 6 with the surface 11 of the optical interface 4, the total instantaneous ratio of the contact area to the cross-sectional area of the object 6 can be doubled, i.e., 72 and 128, respectively, which reduces the adhesion strength of the fragments of the formed object 6 to the surface 11 of the optical interface 4.

When using the wavefront converter 7 in the form of a matrix of focusing elements 22, the build-up (polymerization) surface 10 in the region of each focusing element 22 has a shape similar to a pyramidal one, as shown in FIG. 3 and FIG. 4, and the intensity of actinic radiation and, accordingly, the intensity of polymerization increases toward the tops of the pyramids. The area of engagement of the photopolymer 3 that has not been exposed to the exposure zone approximately corresponds to the surface area of the polymerization surface of the object 6 having a regular relief shape. For example, when using an elementary focusing element 22 of a wavefront converter 7 with dimensions of 30 x 30 μm and a focal length of 30 μm, the area of engagement of the photopolymer 3 in the exposure zone is approximately 2.2 times greater than the surface area of the section of the object to be formed, and approximately 80 times larger than the area contacting the fragments of the formed object 6 with the surface 11 of the optical interface 4.

The diffuse scattering of actinic radiation by the photopolymer 3 and the surface interface material 11 of the optical interface 4 blurs the boundaries between the exposed and unexposed areas in the bulk of the photopolymer 3.

It is important that even with allowance for the diffuse scattering of actinic radiation, from 60 to 65% of the volume of the photopolymer 3 turns out to be unexposed, forming a mobile boundary region 12.

In the process of moving the formed object 6 in the direction away from the surface 11 of the optical interface 4, partially cured gel portions of the photopolymer 3 partially exposed due to diffuse scattering of actinic radiation in the photopolymer 3 and in the material of the optical interface 4 are also brought into the region of exposure 4.

An important feature of the method proposed in this application is the ability to regulate (optimize) the volume of the mobile region 12 in which the photopolymer 3 retains mobility (FIG. 3) by selecting the focal length of the element focusing element 22 of the holographic optical element 23 or the focal length of the elementary microlens an array of 20 microlenses (FIG. 2).

The focal lengths of the elementary focusing elements 22 of the wavefront converter 7 are selected taking into account the depth of penetration of actinic radiation into the photopolymer 3 and the desired width of the mobile region 12 of the construction in the range of 10 to 100 μm, optimally 25-30 μm.

As was said before, one of the means for realizing the wavefront transformation is an array of 20 hemispherical microlenses (elementary focusing elements 22) included in the optical interface 4. Such a wavefront converter 7 is shown in FIG. 5.

The transformation of the wavefront of actinic radiation for the purpose of implementing the present invention can also be carried out by any other known holographic optical element 23, for example, a transmission and/or reflection hologram, a thin or volumetric hologram synthesized and recorded using any known methods for synthesizing and recording holograms, holographic optical elements 23, known as kinoform. In one embodiment, the kinoform may be an array of microscopic Fresnel lenses. Such a wavefront converter 7 is shown in FIG. 6.

Converters 7 of the wave front of various types have different indicators of energy efficiency. The most effective are microlenses, Fresnel holograms -synthetic phase holograms and volume phase holograms, the efficiency of these converters can be from 90 to 100%.

When using the wavefront of the array 20 of microlenses or a holographic optical element 23, for example of the synthetic phase holograms type, as the converter 7, in most cases, it is sufficient to use conventional sources of actinic radiation, such as, for example, mercury lamps or multimedia projector LEDs, which have a mixed spectrum of UV and visible range. Sources with a spectrum predominantly in the UV range can also be used.

Preferably, the actinic radiation source 1 should have a spatial modulation function. For example, projectors containing micro-mirror arrays, transparent LCD matrices 27, etc. can be used.

In the case of using a source of monochromatic coherent radiation - a laser with the use of spatial modulation, as source 1 of actinic radiation, it is possible to form in the region 12 of the construction of the object 6 a holophyme in the form of a spatial interference pattern with a given spatial distribution of the energy of actinic radiation. This allows for the polymerization and curing of the photopolymer 3 to take place when the curing of the photopolymer 3 is preferably at some distance from the surface 11 of the optical interface 4, while the photopolymer 3 located on the surface 11 of the optical interface 4 will remain largely mobile.

When two or more sources 1 of actinic radiation are used whose projection axes form the same or different angles with the plane of the optical interface 4, in the case where the actinic radiation sources 1 operate at the same wavelength and each of the sources 1 provides exposure of its part of the cross-sectional area, the exposure of sections of objects 6 of a larger area with preservation of the resolving power along the axes of the construction plane 26 (FIG. 15).

As shown above, the fragments formed by the vertices of the elementary pyramidal structures that form the surface 10 of the object 6 to be formed have contact with the surface of the optically transparent element 8 intended to contact the photopolymer 3 and can adhere thereto (FIG. 3).

The force required to tear apart the fragments of the formed object 6 from the surface 11 of the optical interface 4 can be approximately expressed by the relationship:

$$F = Km \, (PaSp + Spk)$$

Where: Pa - atmospheric pressure equal to 1,02 kgf / cm;
Sp is the total contact area of fragments of the formed object with the surface of the optical interface, cm2;
k - adhesion of the photopolymer to the material of an optically transparent element intended for contact with a photopolymer, kgf / cm2;
Km is the coefficient of deformation of the surface of the optical interface, (does not exceed 1).

The coefficient of deformation of the surface 11 of the optical interface 4 takes into account the reduction in the force necessary for peeling, due to the so-called "peeling effect", when the peeling begins from the edges of the flat area of the sticking site due to local deformation of the surface of the optically transparent element 8 intended to contact the photopolymer 3.

Estimated calculations and experimental data give the range of the force necessary for detachment of the formed object 6 from the surface 11 of the optical interface 4 from 0.034 to 0.015 kgf per cm2 of the exposed cross-sectional area, and in some cases, 0.008 kgf / cm2 or less.

When using an optically transparent element 8 for contacting the photopolymer 3, a material with a very low surface energy, for example, fluoropolymer, polyethylene, etc., the role of adhesion can be negligible compared to the role of atmospheric pressure. As such materials, for example, polypropylene, polyethylene or other polyolefins, for example, polymethylpentene (TPX ™) from Mitsui Chemicals, Inc, fluoropolymer, for example PTFE (Teflon®) from DuPont can be used.

Alternative methods for overcoming the adherence of the fragments of the surface 10 of forming the formed object 6 to the surface of the optically transparent element 8 intended for contact with the photopolymer 3 are: - the use as the materials for the manufacture and / or coating of the element 8 intended for contact with the photopolymer 3, porous and / or surface capillary structures of hydrophilic materials containing water and aqueous liquids. In this case, the aqueous liquid is supplied through the surface of the optically transparent element 8 intended to contact the photopolymer 3 from the cavity between the optically transparent element 8 intended to contact the photopolymer 3 and the wavefront converter 7, as shown in FIG. 16; - the use as the materials for the manufacture and/or coating of the element 8 intended for contact with the photopolymer 3, porous and/or surface capillary structures of hydrophilic materials containing water and aqueous liquids including polymerization inhibitors. As such materials, for example, dense hydrogels based on acrylic acid can be used. In this case, the aqueous liquid containing the polymerization inhibitor is fed through the microporous surface of the optically transparent element 8 intended to contact the photopolymer 3 from the cavity there between and the wave front converter 7, as shown in FIG. 16; - the use of gas permeable materials as materials for the manufacture of the element 8 intended for contact with the photopolymer 3, which, for example, can promote the penetration of oxygen, which is an inhibitor of radical polymerization. As such materials, for example, TEFLON AF® from DuPont or polymethylpentene from Mitsui Chemicals, Inc. may be used. In this case, the gas mixture containing the polymerization inhibitor is fed through the gas-permeable surface of the element 8 intended to contact the photopolymer 3 from the cavity therebetween and the wavefront converter 7, as shown in FIG. 16.

It is important that in the case of using the described alternative methods to overcome the adhesion of the fragments of the formed object 6 to an optically transparent element 8 intended to contact the photopolymer 3, such as for example methods using polymerization inhibition near its surface, very little inhibition is required.

It is also important that the bulk of the surface of the photopolymer 3 involved in the exposure zone should be outside both the inhibited and partially inhibited zones, i.e., the formation of the object 6 should be carried out from the photopolymer layers 3 that have not been exposed to the inhibitor. Since the area of exposure of the photopolymer 3 to the exposure zone exceeds the contact area of the fragments of the formed object 6 with the surface of the optically transparent element 8 intended to contact the photopolymer 3 (i.e., the inhibited zone) by more than 80 times, almost entirely of uninhibited photopolymer.

To control the tearing off of the fragments of the formed object 6 from the surface of the optically transparent element 8 intended for contact with the photopolymer 3, the optically transparent element 8 intended for contacting the photopolymer 3 can be configured to locally deform and perform oscillatory motions. Such oscillations, for example, can arise when tearing apart fragments of the formed object of the 6 - vertices of the regular structure sections shown in FIG. 3. The ability of the local (within the area of the elementary focusing element 22) deformation of the optically transparent element 8 intended for contact with the photopolymer 3 makes it easier to tear off the fragments of the formed object 6 from the surface of the optically transparent element 8 using the "peeling effect", when the peeling starts from edges of the flat area of the sticking site due to the local deformation of the surface of the optically transparent element 8 intended to contact the photopolymer 3. The oscillation process over 11 of the optical interface 4 makes it possible to intensify the process of transferring the fresh portions of the photopolymer 3 to the object formation region 6 - the vibrations of the membrane transfer the photopolymer 3 along the surface 11 of the optical interface 4. This makes it possible to increase the object formation rate 6 due to a more intense inflow of the photopolymer 3 into the object formation region 6.

The optically transparent element 8 intended to contact the photopolymer 3 can be configured to perform forced oscillatory movements, performed continuously or intermittently. Such oscillations provide a detachment of the material of the element 8 intended to contact the photopolymer 3 from the fragments of the formed object 6 and intensify the inflow of the photopolymer 3 into the exposure region. A non-exclusive example of implementing the forced oscillations of the optically transparent element 8 intended to contact the photopolymer 3 is shown in FIG. 11.

The optically transparent element 8 intended for contact with the photopolymer 3 and the wave front converter 7 can form a sealed connection, for example, sealants or hermetic seals arranged along the perimeter of these elements (not shown in the figures) may be used.

In order to equalize the pressure in the cavity between the optically transparent element 8 intended to contact the photopolymer 3 and the atmospheric pressure wavefront converter 7, the element 8 intended to contact the photopolymer 3 and the wavefront converter 7 can form a leaky connection, for example, can be used a gas permeable separator installed as a spacer between these elements along their perimeter (not shown in the figures).

In the cases where, for example, to compensate for the mass of the liquid photopolymer 3, it is required to adjust the medium pressure between the optically transparent element 8 intended to contact the photopolymer 3 and the wave front converter 7 and/or when it is required to provide a medium of a certain composition, for example, an aqueous liquid in the case of using the optically transparent element 8 in the form of a permeable hydrophilic membrane, or a certain gaseous medium, in the case of an optically PT / UA 2016 / 000104 transparent element 8 in the form of a gas of the permeable membrane, the element 8 intended to contact the photopolymer 3 and the wave front converter 7 can form a sealed connection so that a cavity there between communicates with a separate reservoir 33, for example by a conduit. For the circulation and / or supply of a given medium and control of its flow, valves 34, valves, pumps 35 of various types can be used. A non-limiting example of such a construction is shown in FIG. 16.

For each of the considered embodiments of the invention, the mobility of the layer bordering the surface 11 of the optical interface 4 is achieved by converting the wavefront of actinic radiation forming the projection of the formed object 6 and provides an easy overcoming of the adherence of the fragments of the formed object 6 to the surface of the optically transparent element 8 intended for contact with the photopolymer 3 and an effective constant inflow of the photopolymer 3 into the exposure zone during the movement of the object 6 along the axis of the triplets.

The moving mode of the formed object 6 along the construction axis is preferably continuous, with uniform or variable speed. The travel speed can be from about 0.1 or 10 microns per second, up to 100, 1000 or 10,000 microns per second, depending on factors such as the intensity of the actinic radiation, the structure of the object 6, the temperature and viscosity of the photopolymer 3, etc..

A stepping mode of moving the formed object 6, for example, from 0.1 or 1 $\mu$m, up to 10 or 100 microns or more for each step, with a constant or variable step size, can be realized.

In certain cases, the exposure of the section of object 6 to actinic radiation is preferably carried out in the form of a continuous sequence of elementary cross sections, the intensity of actinic radiation is determined by the required process parameters, such as the speed of movement, the structure of the object 6, the presence of dyes in the photopolymer 3,

An intermittent mode of exposure of the cross sections with actinic radiation can be realized, with pauses or with intensity fluctuations, depending on the type of photopolymer 3, the presence or absence of dyes,

Process control can be performed by the controller.

The controller can be implemented in the form of hardware circuits, software and/or a combination thereof. For example, the controller may be a general-purpose computer that starts the software and which is functionally connected to sensors, for example, temperature, position, intensity of actinic radiation sensors, etc., and actuators, for example, a displacement drive, a temperature control system, a source actinic radiation with spatial modulation, etc. through the appropriate interface. The process control is carried out in accordance with the specified operation algorithm and device sensor data. The principles of constructing such systems are well known to those skilled in the art.

Software for managing the process of forming a three-dimensional object includes, but not limited to, programs for 3D printing with open source code Slic3r, RepiicatorG, 3DPrint ™ software controller from ST systems, Skeraforge, KISSlicer, Repetier, etc., including their combination.

Selection of operating modes can be carried out by entering previously defined process parameters or determined by the "trial and error" method. Selection of operating modes can be carried out by monitoring and feedback, their combination with previously defined modes, or in any other suitable way.

The three-dimensional objects obtained using the method and device of the invention may be ready for use or intended for further processing. The stages of further processing can be, for example: machining, painting, chemical processing, gluing, filling of voids and internal channels with polymer systems, which subsequently harden, etc.

Using the method and the device according to the invention, it is possible to produce: models and prototypes of various sizes and shapes, including those whose manufacture, with the use of other technologies, is difficult or impossible, models for casting on burned and/or melted models, electronic devices, gears, levers, fastening elements, tubes, decorative elements, etc.

Using the method and device according to the invention can be manufactured medical devices and implantable medical devices such as stents for vascular capsule drug delivery, arrays of microneedles, rods, fibers, profiles of various sections, the optical fiber elements micromechanical devices, elements of microfluidic devices, arrays of microcapillaries, various cellular and microcellular structures, etc.

The geometric dimensions of objects formed using the method and device according to the invention can be from 0.1 or 1 mm to 10 or 200 mm or more in height and / or a maximum width of 0, 1 or 1 mm to 10 mm or 200 mm or more in width. The object may also have a height of 10 or 100 nanometers to 10 or 200 microns or more and / or a maximum width of 10 or 100 nanometers to 10 or 200 microns or more. These are just examples: the maximum size depends on the design of a particular device and the resolution of the source of actinic radiation.

Since the method and the device according to the invention make it possible to use a wide variety of photopolymer systems, this makes it possible to produce objects from materials with different properties: objects can be rigid, flexible, elastic or gel-like, such as a hydrogel. The objects can also be composite, contain reinforcing inclusions and/or can be made from several different polymers.

Below are examples of the implementation of the claimed method and the device for forming a three-dimensional object from a liquid photopolymer using the wavefront transformation of actinic radiation to obtain specific objects.

Example 1.

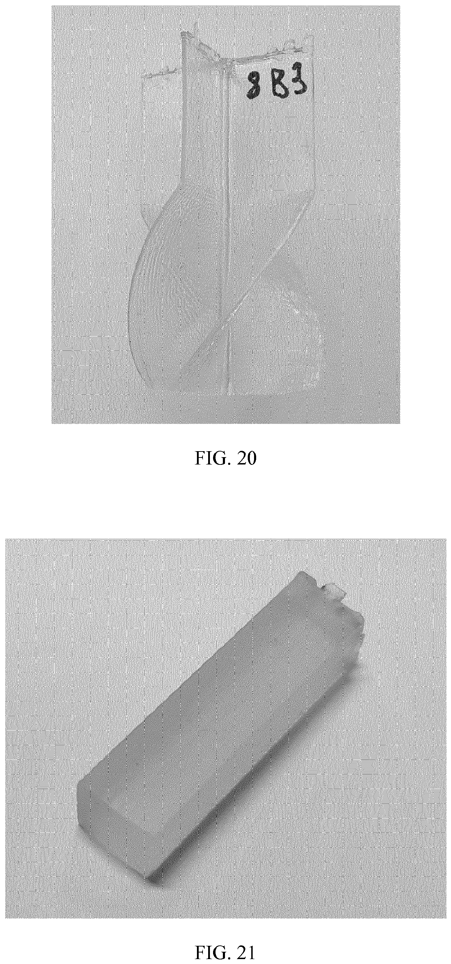

Test object having a cruciform cross-section, twisted into a spiral at half-length, with a structural surface, 30x30x60mm size, wall thickness of 1.2 mm (see. FIG. 20) made of transparent acrylic photopoyler from the company "Fun To Do", Vossenkoog 2- 4 1822BG Alkmaar, Netherlands

The optical interface design was used, which is a reservoir for a photopolymer made of polyethylene, the bottom of which is made in the form of a composite structure similar to that shown in FIG. 7, where: as the material of the element intended for contact with the photopolymer, a polypropylene film having a thickness of 20 $\mu$m was used. The wavefront converter was an array of hexagonal microlenses 80 $\mu$m in size with a focal length of 40 $\mu$m, based on a thickness of 300 $\mu$m, made of PMMA

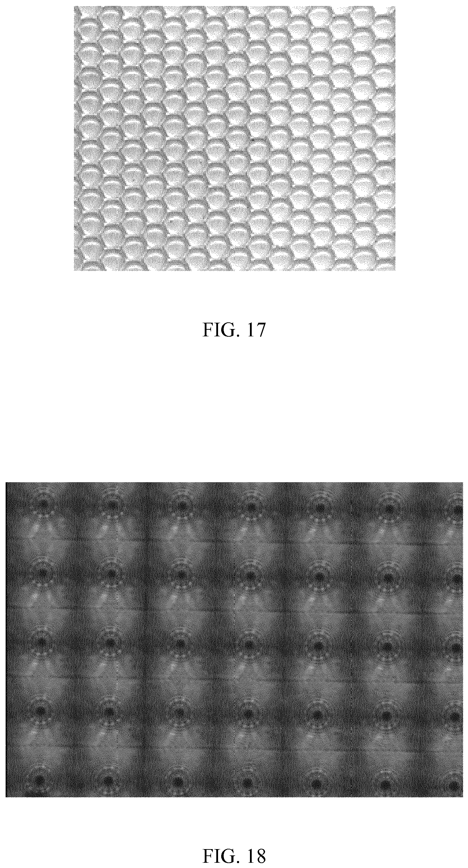

(FIG. 17). Molds for casting such lenses on standard equipment are available from the company "NIL Technology" Ar Diplomvej 381 DK-2800 Kongens Lyngby, Denmark.

The exposition was carried out by a multimedia projector of actinic radiation with spatial modulation by a micromirror matrix DLP having a resolution of 1929x1080, ACER P 1500.

The movement was unidirectional, continuous with a pitch of 2.4 microns.

The travel speed is 200 $\mu$m / sec.

The exposure in the form of a continuous sequence of sections. The number of elementary projections of the cross section is 1800.

Time of object formation is 5 min.

Example 2.

A test object having a square cross-section of 6x6x50 mm (see FIG. 21) made of acrylic photopolymer from the company "Fun To Do" Vossenkoog 2-4 1822BG Alkmaar, The Netherlands.

We used an optical interface design, which is a reservoir for a fluoropolymer photopolymer, whose bottom is made in the form of a composite structure (FIG. 7), where: - as the material of the element intended for contact with the photopolymer, a polyethylene film with a thickness of 10 $\mu$m was used;

- as a wavefront converter, a thin hologram was used on a 30 $\mu$m film carrier, representing an array of hologram lenses of square shape with dimensions of an elementary microlens of 25 x 25 $\mu$m and a focal length of 30 $\mu$m (see FIG. 18), such holograms are manufactured by Holoptica 425 Old Country Road , Suite A & B, Belmont CA 94002, USA;
- As a cooling unit of the optical interface, a flat reservoir 4 mm thick was used, filled with a coolant, which used water, the coolant circulation was not carried out.

The exposition was carried out by a multimedia projector of actinic radiation with spatial modulation by a micromirror matrix DLP having a resolution of 1929 X 1080, ACER P 1500.

The movement is unidirectional, continuous, with a pitch of 2.4 microns.

The travel speed is 167 $\mu$m / sec.

Exposure in the form of a continuous sequence of sections. We used a fragmentary exposure in the form of bands with a step of 4 pixels of the image, with alternating exposed and unexposed bands from projection to projection.

The number of elementary projections of the cross section is 1500.

Time of object formation - 6 min.

Example 3.

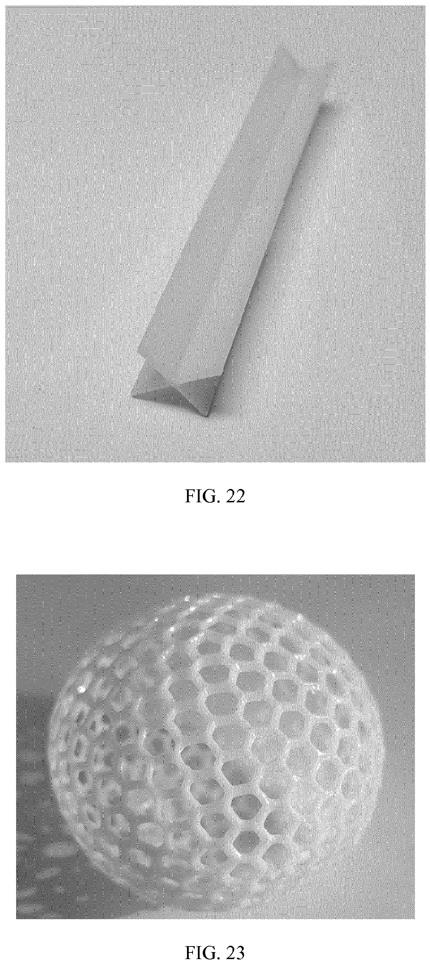

A test object having a cross-section of 10x10x80 mm in dimensions with a wall thickness of 0.8 mm, with a smooth surface (see FIG. 22) made from a photopolymer containing a white pigment, from the company "Fun To Do" Vossenkoog 2-4 1822BG Alkmaar, The Netherlands.

We used an optical interface design, which is a reservoir for a fluoropolymer photopolymer, whose bottom is made in the form of a composite structure (FIG. 7), where: - as a material of the element intended for contact with the photopolymer, a film of oriented polyethylene with a thickness of 8 μm was used;

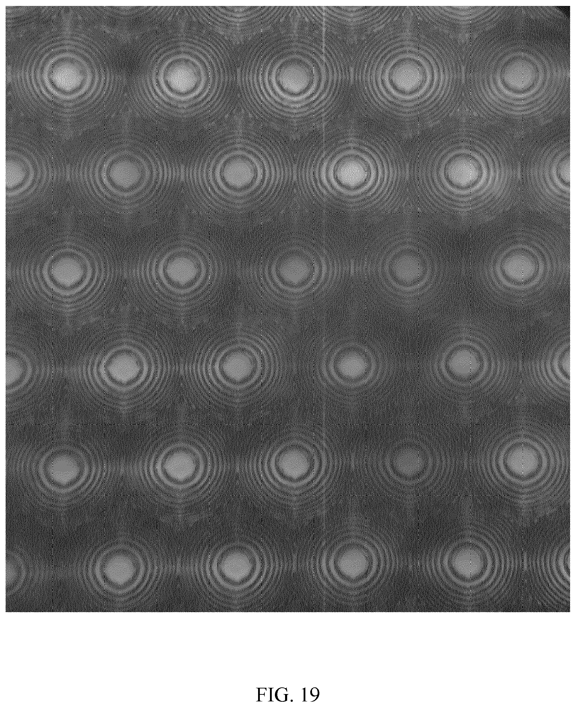

- a hologram of the type of cineforms on a 30 μm film carrier was used as the wave front converter, which is a array of hexagonal holograms of a Fresnel hologram with dimensions of an elementary microlens of 35 μm and a focal length of 40 μm (see FIG. 19), such holograms are manufactured by Holoptica "425 Old Country Road, Suite A & B, Belmont CA 94002, USA;
- as a cooling unit of the optical interface, a flat reservoir 4 mm thick was used, filled with a coolant, which used water, the coolant circulation was not carried out.

The exposition was carried out by a multimedia projector of actinic radiation with spatial modulation by a micromirror matrix DLP having a resolution of 1929x1080, ACER P 1500.

The movement is unidirectional, continuous, with a pitch of 2.4 microns.

The displacement speed is 113.3 μm / sec.

Exposure in the form of a continuous sequence of sections. The number of elementary projections of the cross section is 2000.

Time of object formation - 12 min.

Example 4.

A test object of spherical shape with a diameter of 50 mm with an average thickness of 2 mm elements, with a smooth surface (see FIG. 23) made of a photopolymer containing a white pigment from the company Fun To Do. Vossenkoog 2-4 1822BG Alkmaar, The Netherlands.

We used an optical interface design, which is a reservoir for a fluoropolymer photopolymer, whose bottom is made in the form of a composite structure (FIG. 1), where:

- as a material of the element intended for contact with the photopolymer, a film made of a silicone composition 35 microns thick was used. The membrane is stretched with the possibility of oscillations;
- a hologram of phase synthetic type on a 30 μm film

carrier was used as a wavefront converter. It is a array of six-angular hologram Fresnel lenses with dimensions of an elementary microlens of 35 μm and a focal length of 40 μm (see FIG. 19). Such holograms are manufactured by Holoptica 425 Old Country Road, Suite A & B, Belmont CA 94002, USA.
- air cooling.

The exposition was carried out by a multimedia projector of actinic radiation with spatial modulation by a micromirror matrix DLP having a resolution of 1929x1080, ACER P 1500.

The movement is unidirectional, continuous, with a pitch of 2.4 microns.

The displacement speed is 113.3 μm / sec.

Exposure in the form of a continuous sequence of sections. The number of elementary projections of the cross section is 1600.

Time of object formation - 7.3 minutes.

INDUSTRIAL APPLICABILITY

The industrial applicability of the inventive method and device is confirmed by the possibility of forming a three-dimensional object from a liquid photopolymer and manufacturing the device for its implementation on known equipment under industrial production conditions using known materials and means.

**Claims**

1. A method for forming a three-dimensional object from an actinic radiation curable liquid photopolymer, comprising: projecting an elementary section with actinic radiation, exposing a sequence of elementary cross sections, moving an obtained object along a construction axis, forming an object from a movable boundary zone of the photopolymer, **characterized in that** a mobility of the photopolymer boundary zone is provided in such a way that a wavefront of the actinic radiation is transformed in such a way that a specific radiative intensity in exposed regions has a gradient along the construction axis, and in the moving boundary zone the photopolymer is partially exposed.

2. The method for forming the three-dimensional object from the liquid photopolymer according to claim 1, **characterized in that** during projecting of the elementary section with actinic radiation, the elementary section is divided into fragments, wherein exposure parameters for each fragment is controlled separately, for example, the fragment exposure is performed sequentially and/or with different level of specific radiative intensity.

3. A device for forming a three-dimensional object from a liquid photopolymer, comprising at least of one source of actinic radiation, a container for placing the photopolymer provided with a window-optical interface, and a mechanism for moving the object along a construction axis, **characterized in that** the optical interface is configured as at least one converter of a wavefront of actinic radiation, in a region of a focus plane of which an optically transparent element being in contact with the photopolymer is placed.

4. The device for forming the three-dimensional object from the liquid photopolymer of claim 3, wherein the actinic radiation wavefront converter is a matrix of microlenses adjacent to each other and placed in a single layer on a common base of an optically transparent material.

5. The device for forming the three-dimensional object from the liquid photopolymer of claim 3, **characterized in that** the wavefront converter of actinic radiation is made in a form of a holographic optical element, for example in the form of a Fresnel zone plate array, a thin phase or amplitude hologram, a volume phase transmissive hologram, a matrix of hologram lenses, a thin phase synthesized hologram, or a matrix of Fresnel microlenses.

6. he device for forming the three-dimensional object from the liquid photopolymer according to claim 3, **characterized in that** the optically transparent element being in contact with the photopolymer is in a form of a membrane of a thin film or in a form of a plate.

7. The device for forming the three-dimensional object from the liquid photopolymer of claim 3, **characterized in that** the optically transparent element being in contact with the photopolymer is in a form of a membrane of a thin film or a plate that is a wave front converter.

8. The device for forming the three-dimensional object from the liquid photopolymer of claim 3, further comprising a temperature-maintaining unit for the optically transparent element being in contact with the photopolymer.

9. The device for forming the three-dimensional object from the liquid photopolymer according to claim 3, **characterized in that** the optically transparent element being in contact with the photopolymer is configured to perform oscillatory movements.

10. The device for forming the three-dimensional object from the liquid photopolymer of claim 3, **characterized in that** it comprises at least two wavefront converters of actinic radiation that form the optical interface.

11. The device for forming the three-dimensional object from the liquid photopolymer according to claims 3, 10, **characterized in that** it comprises at least two wavefront converters of actinic radiation that form the optical interface, wherein at least one wave front converter of actinic radiation is made in a form of a holographic optical element; the holographic optical element being either a transmitting hologram or a reflecting hologram.

12. The device for forming the three-dimensional object from the liquid photopolymer according to claim 2, **characterized in that** it comprises at least two sources of actinic radiation whose projection axes form same or different angles with a plane of the optical interface.

FIG. 1

*Actinic radiation*

FIG. 2

**Actinic
radiation**

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21

FIG. 22

FIG. 23

**EP 3 508 330 A1**

## INTERNATIONAL SEARCH REPORT

| | |
|---|---|
| International application No. | |
| PCT/UA 2016/000104 | |

| A. CLASSIFICATION OF SUBJECT MATTER |
|---|
| B29C 64/135 (2017.01) |
| According to International Patent Classification (IPC) or to both national classification and IPC |

| B. FIELDS SEARCHED |
|---|
| Minimum documentation searched (classification system followed by classification symbols) |
| B29C 33/00 - 33/76, 35/00 - 35/18, 64/10, 64/135, 67/00 - 67/24, G03F 1/00 - 1/92, 7/00 - 7/42 |
| Documentation searched other than minimum documentation to the extent that such documents are included in the fields searched |
| Electronic data base consulted during the international search (name of data base and, where practicable, search terms used) |
| PatSearch (RUPTO internal), USPTO, PAJ, Esp@cenet, DWPI, EAPATIS, PATENTSCOPE, Information Retrieval System of FIPS |

| C. DOCUMENTS CONSIDERED TO BE RELEVANT | | |
|---|---|---|
| Category* | Citation of document, with indication, where appropriate, of the relevant passages | Relevant to claim No. |
| A | US 2013/292862 A1 (B9CREATIONS, LLC) 07.11.2013 | 1-2 |
| A | US 5785918 A1 (SEAGATE TECHNOLOGY, INC.) 28.07.1998 | 1-2 |
| A | WO 2014/126834 A2 (EIPI SYSTEMS, INC) 21.08.2014 | 1-2 |
| A | US 6214276 B1 (CREO SRL) 10.04.2001 | 1-2 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 05 May 2017 (05.05.2017) | 11 May 2017 (11.05.2017) |

| Name and mailing address of the ISA/ | Authorized officer |
|---|---|
| | |
| Facsimile No. | Telephone No. |

Form PCT/ISA/210 (second sheet) (July 1998)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7438846 B
- US 20070063389 A
- US 20130292862 A
- US 201213600729 A
- CA 2898106 A1
- WO 2014126834 A3
- US 8232043 B
- US 8119214 B
- US 7935476 B
- US 7767728 B
- US 7649029 B
- WO 2012129968 A1
- JP 2012210408 A
- CN 102715751 A
- US 7824839 B
- US 7550246 B
- US 7534844 B
- US 5374500 A
- US 6692891 B
- US 7651883 B
- US 7651682 B
- US 7556490 B
- US 6602975 B
- US 5836313 A
- US 4765818 A
- US 770997 A
- US 7108947 B
- US 8242299 B
- US 7368514 B
- US 8147918 B
- US 6932930 B
- US 7919162 B
- US 6312134 B
- US 6248509 B
- US 6238852 B
- US 5691541 A
- UA 2016000104